# EUROPÄISCHE PATENTANMELDUNG

(11) **EP 0 805 247 A1**
(43) Veröffentlichungstag der Anmeldung: **05.11.1997**
(21) Anmeldenummer: 96106883.0
(22) Anmeldetag: 30.04.1996
(51) Int. Cl.: E05B 49/00, G07C 9/00

(54) **Identifikationsvorrichtung**

(71) Anmelder: SIEMENS AKTIENGESELLSCHAFT, 80333 München (DE)
(72) Erfinder: Reinhardt, Siegfried, 93188 Dettenhofen (DE)

(57) **Zusammenfassung**

Eine Identifikationsvorrichtung weist ein Fühlerelement (1) mit einer Auflagefläche (2) auf, auf die ein Finger (4) eines Benutzers gelegt wird. Eine Meßeinrichtung (5, 6, 7, 8) ermittelt den "inneren" Fingerabdruck und vergleicht diesen mit gespeicherten Mustern. Bei weitgehender Übereinstimmung wird ein Freigabesignal erzeugt. Damit die Identifikationsvorrichtung nur dann in Betrieb ist, wenn ein Identifikationsvorgang gestartet werden soll, wird sie durch einen Schalter (10) erst dann eingeschaltet, wenn der Finger (4) die Auflagefläche (2) berührt. Hierzu ist der Schalter (10) innerhalb der Auflagefläche (2) angeordnet.

## Beschreibung

Die Erfindung betrifft eine Vorrichtung zur Identifikation der Raumstruktur eines Prüfobjektes gemäß Oberbegriff von Anspruch 1.

Bekannte Identifikationsvorrichtungen (DE 42 22 387 C2, EP 0 402 779 A2 oder US 4,977,601) dienen dazu, Personen anhand der genetisch determinierten Charakteristika der Hautoberfläche (Fingerabdruck) oder anhand der Epithelstruktur im Inneren der Epidermis der menschlichen Fingerkuppe eindeutig als berechtigt zu identifizieren. Hierzu weisen die bekannten Vorrichtungen ein Fühlerelement mit einer Auflagefläche auf, auf die ein Benutzer seinen Finger auflegt.

Durch eine Meßeinrichtung wird der Finger beispielsweise mit Ultraschall beschallt und die von dem Finger reflektierten oder gestreuten Ultraschallwellen werden mit Hilfe von mathematischen Methoden ausgewertet. Da die reflektierten Ultraschallsignale an den Hautgewebestrukturen gestreut und reflektiert werden, ist in dem empfangenen Signal in charakteristischer Weise die Gewebestruktur enthalten, die für jeden Menschen charakteristisch ist und wodurch jeder Mensch identifiziert werden kann.

Eine Vergleichseinrichtung vergleicht die durch mathematische Methoden erhaltene Gewebestruktur mit in einer Vergleichseinrichtung gespeicherten Mustern. Gespeichert werden vorab nur Muster von Benutzern, die für einen bestimmten Zugang, einen Zutritt oder eine Benutzung berechtigt sind. Bei zumindest weitgehender Übereinstimmung wird ein Freigabesignal erzeugt, durch das ein Aggregat gesteuert wird.

Wenn solche Vorrichtungen in einem Kraftfahrzeug verwendet werden und ständig in Betrieb sind, so besteht die Gefahr, daß sich die Fahrzeugbatterie mit der Zeit entlädt.

Der Erfindung liegt das Problem zugrunde, eine Identifikationsvorrichtung zu schaffen, die nur dann eingeschaltet wird, wenn ein Prüfobjekt identifiziert werden soll.

Dieses Problem wird erfindungsgemäß durch die Merkmale von Patentanspruch 1 gelöst. Die erfindungsgemäße Lösung hat den Vorteil, daß nur dann Energie von der Identifikationsvorrichtung verbraucht wird, wenn ein Identifikationsvorgang stattfinden soll. Selbst bei längeren Ruhezeiten wird keine Energie verbraucht.

Vorteilhafte Ausgestaltungen der Erfindung sind in den Unteransprüchen gekennzeichnet.

Ausführungsbeispiele der Erfindung werden im folgenden anhand der schematischen Zeichnungen näher erläutert. Es zeigen:
- Figuren 1 und 2: Blockschaltbilder einer erfindungsgemäßen Identifikationsvorrichtung,
- Figur 3: einen Schnitt durch ein Fühlerelement der erfindungsgemäßen Identifikationsvorrichtung und
- Figur 4: eine Ansicht der Identifikationsvorrichtung bei Verwendung in einem Kraftfahrzeug.

Eine erfindungsgemäße Identifikationsvorrichtung dient dazu, eine Person anhand der genetisch determinierten Charakteristika der Hautoberfläche (Hautfurchen, Fingerabdruck), der Epithelstruktur im Inneren der Epidermis der menschlichen Fingerkuppe ("innerer Fingerabdruck"), der Anordnung/Struktur der Schweißdrüsen oder sonstiger biometrischer Strukturen zu identifizieren. Darüber hinaus wird geprüft, ob die Person für einen bestimmungsgemäßen Zugang, Zutritt oder Benutzung eines Objekts berechtigt ist (Authentifikation).

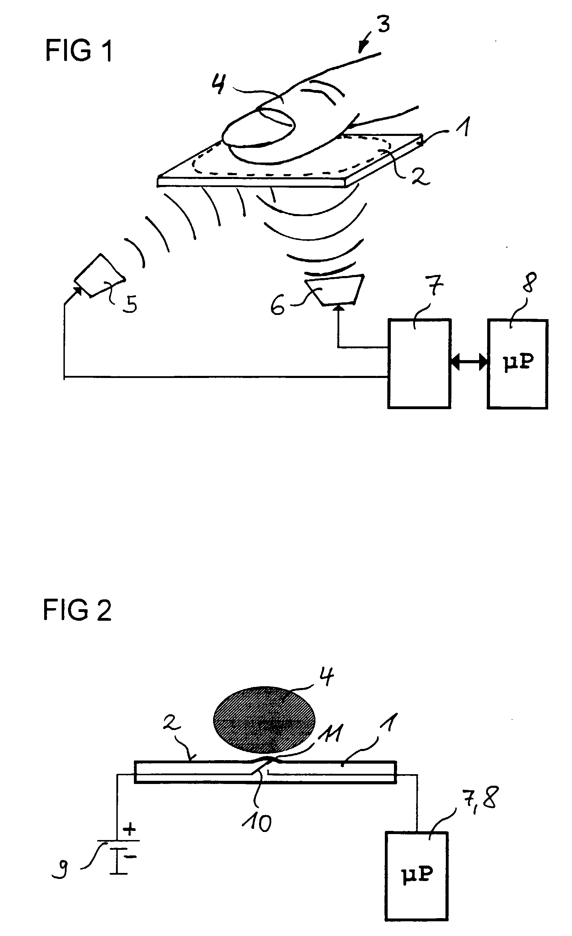

Hierzu weist die Vorrichtung ein Fühlerelement 1 (Figur 1) auf, auf dessen Auflagefläche 2 ein Prüfobjekt 3, wie z.B. ein menschlicher Finger 4 oder die ganze Hand, gelegt wird. Über eine Sendeeinheit 5 wird der Finger 4 mit breitbandigem Ultraschall beschallt. Wenn die Fingerkuppe die Auflagefläche 2 berührt, so dringen die Ultraschallsignale zumindest teilweise in das Innere des Fingers 4 ein und/oder werden an der - inneren oder äußeren - Hautgewebestruktur gestreut oder reflektiert.

Die gestreuten und reflektierten Signale werden von einer Empfangseinheit 6 empfangen. Die Sendeeinheit 5 und die Empfangseinheit 6 werden von einer Steuereinheit 7 gesteuert, die die Signale an eine Auswerteeinheit 8 weiterleitet, wo die Signale nach bekannten mathematischen Verfahren oder Methoden ausgewertet werden.

In der Auswerteeinheit 8 sind bereits Muster für biometrische Strukturen von berechtigten Benutzern abgespeichert. Die empfangenen und ausgewerteten Signale werden mit den gespeicherten Mustern verglichen. Bei zumindest weitgehender Übereinstimmung wird ein Freigabesignal erzeugt, das an ein Sicherheitsaggregat gesendet wird und durch das dieses von einem gesperrten in einen nichtgesperrten Zustand oder umgekehrt gesteuert wird. Durch das Freigabesignal kann ein Zugang zu einem Objekt (beispielsweise durch Entriegeln von Türschlössern) oder ein Benutzen eines Objekts (z.B. durch Freigeben eines Computers oder eines Telefons) ermöglicht werden.

Wenn die erfindungsgemäße Identifikationsvorrichtung bei Geräten verwendet wird, die ihre Energie von einer Energiequelle mit begrenztem Energievorrat beziehen, so besteht die Gefahr der Entladung dieser Energiequelle. Als Energiequelle können Batterien, Akkumulatoren, Kondensatoren oder funktionell gleichwertige Bauteile verwendet werden. Im folgenden wird der Einfachheit halber das Wort "Batterie" 9 für die Energiequelle verwendet, wobei die Batterie 9 die angeschlossenen Bauteile mit einem Strom und einer Spannung versorgt.

Damit die Identifikationsvorrichtung nur dann eingeschaltet wird und somit nur dann Energie verbraucht wird, wenn ein Identifikationsvorgang vorgenommen werden soll, weist das Fühlerelement 1 erfindungsgemäß einen Schalter 10 (Figur 2) auf. Der Schalter 10 ist innerhalb der Auflagefläche 2 derart angeordnet, daß er bei Berühren oder Annähern des Fingers 4 schaltet. Im eingeschalteten Zustand des Schalters 10 wird die Identifikationsvorrichtung mit Strom versorgt, indem der Pluspol der Batterie 9 mit den Spannungs- oder Stromversorgungsanschlüssen der Steuereinheit 7 und der Auswerteeinheit 8 verbunden wird.

Der Schalter 10 kann dabei als Tastschalter ausgebildet sein, der bereits bei leichtem Druck auf eine elastisch Wölbung 11 der Auflagefläche 2 niedergedrückt wird, so daß der Schalter 10 eingeschaltet wird. Dabei befindet sich der Schalter 10 unmittelbar unter der Wölbung 11, die Teil der Deckschicht des Fühlerelements 1 ist. Der Schalter 10 ist also von außen durch den Finger 4 zu betätigen.

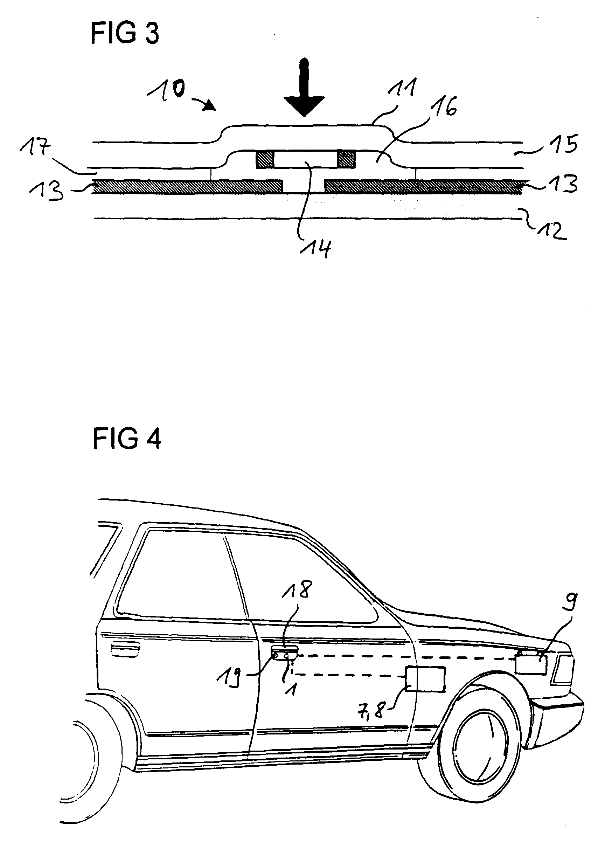

Da in einem solchen Fall der Schalter 10 nur sehr klein ausgebildet sein darf, sollte der Schalter 10 vorteilhafterweise als mikromechanischer Halbleiter-Schalter ausgebildet sein. Hierzu sind auf einem Substrat 12 (Figur 3) zwei feststehende, streifenförmige Anschlußelektroden 13 angeordnet, die durch eine bewegliche, ringförmige Schaltelektrode 14 elektrisch miteinander verbunden werden, wenn die Schaltelektrode 14 in elektrischem Kontakt mit den Anschlußelektroden 13 ist.

Wenn sich der Finger 4 auf die Auflagefläche 2 des Fühlerelements 1 auflegt, wird eine weichelastische Wölbung 11 in einer Deckschicht 15, deren Oberfläche die Auflagefläche 2 bildet, niedergedrückt (in Richtung des Pfeiles in der Figur 3). Da die Schaltelektrode 14 im Bereich der Wölbung 11 an der Unterseite der Deckschicht 15 befestigt ist, wird die Schaltelektrode 14 auf die beiden Anschlußelektroden 13 gedrückt, so daß die elektrische Verbindung hergestellt wird. Die Anschlußelektroden 13 und die Schaltelektrode 14 sind dabei in einem Hohlraum 16 angeordnet, dessen Volumen sich verringert, wenn die Wölbung 11 niedergedrückt wird. Der Hohlraum 16 wird durch eine Isolationsschicht 17 abgeschlossen, die zwischen der Deckschicht 15 und dem Substrat 12 sowie den Anschlußelektroden 13 angeordnet ist.

Die Anschlußelektroden 13 und die Schaltelektrode 14 sind aus einem elektrisch leitenden Material und die anderen Schichten 12, 15 und 17 aus einem elektrisch isolierenden Material hergestellt. Eine der Anschlußelektroden 13 kann dabei mit der Batterie 9 und die andere der Anschlußelektroden 13 mit der Steuereinheit 7 sowie der Auswerteeinheit 8 verbunden sein.

Die Herstellung von mikromechanischen Halbleiter-Schaltern ist bekannt (beispielsweise aus DE 44 14 970 A1) und braucht daher nicht näher erläutert zu werden. Auch werden bei deren Herstellungsverfahren aus der IC-Fertigung bekannte Prozesse und Materialien (mit Siliziumoxid als isolierende Schichten und mit Aluminiumlegierungen als elektrisch leitende Schichten) verwendet.

Der Schalter 10 kann auch als kapazitiver Schalter ausgebildet sein, wobei eine oder mehrere metallische Elektroden des kapazitiven Schalters 10 an oder in der Nähe der Oberfläche der Auflagefläche 2 angeordnet sind. Durch das Auflegen oder Annähern des Fingers 4 an die Auflagefläche 2 wird die Kapazität des Schalters 10 verändert, da der menschliche Finger oder Körper eine Kapazität besitzt und die Haut eine Dielektrizitätskonstante aufweist. Der Schalter 10 reagiert auf die Kapazitäts- (oder auch Dielektrizitäts-)änderung und schaltet durch.

Der Schalter 10 kann auch als Piezoelement ausgebildet sein, bei dessen Betätigung (mechanischer Druck auf das Piezoelement) bekannterweise eine Spannung erzeugt wird. Sobald der Benutzer mit seinem Finger 4 auf die Auflagefläche 2 drückt, wird der Piezo-Schalter betätigt und eine Spannung erzeugt, die auch zur Energieversorgung der Identifikationsvorrichtung dienen kann.

Wenn der Schalter 10 als Piezoelement ausgebildet ist, so kann die Identifikationsvorrichtung im Falle einer leeren Batterie 9 auch als Noteinrichtung dienen. Durch einmaliges oder mehrmaliges Betätigen des Schalters 10 wird eine so hohe Spannung erzeugt, die ausreicht, die Identifikationsvorrichtung allein mit Energie zu versorgen.

Für die Erfindung ist es nicht wesentlich, wie der Schalter 10 ausgebildet ist, sondern lediglich, daß der Schalter 10 die Energieversorgung der Identifikationsvorrichtung einschaltet, wenn ein Prüfobjekt 3, 4 in die Nähe der Identifikationsvorrichtung geführt wird, die Auflagefläche 2 berührt oder den in der Auflagefläche 2 integrierten Schalter 10 niederdrückt. Die Identifikationsvorgang bleibt solange eingeschaltet, wie der Prüfobjekt 3, 4 auf der Auflagefläche 2 liegt oder solange der Identifikationsvorgang dauert.

Der Schalter 10 darf die Identifikation, d.h. das Erfassen der Charakteristika des Prüfobjekts 3, 4 (innere Raumstruktur der Haut, Fingerabdruck, usw.), nicht sonderlich beeinflussen. Er sollte daher nur ganz geringe Abmessungen aufweisen oder aus einem Material hergestellt sein, das gut durchlässig für die von der Sendeeinheit 5 ausgesendeten und von der Empfangseinheit 6 empfangenen Signale ist. Die Größe des Schalters 10 hängt dabei einerseits von der Größe des Prüfobjekts 3 ab und andererseits davon, ob die empfangenen und durch das Prüfobjekt 3, 4 nicht gestörten Signale ausreichen, das Prüfobjekt 3 gut und sicher zu identifizieren.

Die erfindungsgemäße Identifikationsvorrichtung kann vorzugsweise bei einem Kraftfahrzeug verwendet werden. Dabei ist das Fühlerelement 1 am oder in der Nähe eines Türgriffs 18 (Figur 4) angeordnet. Wenn der Benutzer seinen Finger 4 auf die Auflagefläche 2 des Fühlerelements 1 legt, so wird die Identifikationsvorrichtung mit Strom versorgt. Hierzu schaltet der Schalter 10 eine elektrische Verbindung zwischen dem Pluspol der Kraftfahrzeugbatterie 9 und der Steuereinheit 7 sowie der Auswerteeinheit 8. Nach der korrekten Identifikation des Benutzers kann ein Türschloß 19 entriegelt und/oder die Wegfahrsperre gelöst werden, damit das Kraftfahrzeug benutzt, d.h. gestartet und gefahren werden kann.

Zusätzlich kann die Identifikationsvorrichtung auch im Fahrzeuginneren angeordnet sein, um die Wegfahrsperre bei Berechtigung zu lösen. Vorteilhafterweise ist das Fühlerelement 1 dann auf einem nicht dargestellten Zündknopf angeordnet, der wie ein Zündschlüssel zu betätigen ist, wenn der Motor gestartet werden soll.

Durch die Wegfahrsperre wird der Betrieb oder das Benutzen des Kraftfahrzeugs durch codierten Eingriff in zumindest eine betriebsrelevante Einheit (wie die Motorsteuerung, Zündsteuerung, Kraftstoffzufuhr, Getriebesteuerung, Bremsanlage, usw.) verhindert. Die Wegfahrsperre schärft sich beim Verlassen des Kraftfahrzeugs selbst. Beim erneuten Starten des Motors muß die Wegfahrsperre mit Hilfe einer Authentifikation wieder gelöst werden. Wenn der Zutritt zu dem Kraftfahrzeug bereits über die biometrische Identifikation erfolgte, so kann das Lösen der Wegfahrsperre auch über ein anderes Authentifikationsmittel, zum Beispiel einen ein benutzerspezifisches Codesignal ausstrahlenden Sender/Transponder, veranlaßt werden.

Es genügt, wenn nur das Fühlerelement 1 mit seiner Auflagefläche 2 von außen durch den Benutzer zugänglich ist. Die Steuereinheit 7 und die Auswerteeinheit 8 sind vorteilhafterweise in der Nähe des Fühlerelements 1 und gegebenenfalls in der Nähe des Sicherheitsaggregats angeordnet. Infolgedessen werden keine großen Leitungslängen zwischen den einzelnen Bauteilen benötigt. Die Steuereinheit 7 und die Auswerteeinheit 8 können auch innerhalb eines ohnehin vorhandenen Steuergeräts im Kraftfahrzeug angeordnet sein. Die Sendeeinheit 5 und die Empfangseinheit 6 sind dann über separate Leitungen oder über eine Kraftfahrzeug-Busleitung mit dem Steuergerät verbunden. Als Steuergerät kann dann das Motorsteuergerät dienen, in dem in diesem Fall auch die Funktion der Wegfahrsperre realisiert ist.

Vorteilhafterweise kann der Schalter 10 auch mit einem pyrotechnischem Element (wie einer Zündpille, wie sie beispielsweise zum Aktivieren eines Gasgenerators zum Aufblasen eines Luftsacks eines Airbags verwendet wird) verbunden sein. Bei zu geringem Energievorrat der Kraftfahrzeugbatterie kann das pyrotechnische Element durch den Schalter 10 aktiviert werden und somit die Energie zum Entriegeln der Türschlösser liefern. Die Kraftfahrzeugbatterie kann anschließend wieder aufgeladen werden.

Wenn der Schalter 10 als Piezoelement realisiert ist und eine Notsituation (Strom/Spannungsausfall, leere Batterie 9 oder Unfall) vorliegt, so kann die durch das Piezoelement erzeugt Spannung zum Zünden des pyrotechnischen Elements verwendet werden, um Türriegel von Türschlössern zu betätigen. Allerdings darf nur im Falle eines Unfalls keine Identifikation stattfinden, da sich der berechtigte Benutzer in einem solchen Fall noch in dem Fahrzeug befindet. Denn Hilfspersonen müssen in der Notsituation das Kraftfahrzeug von außen öffnen können.

Der Vorgang der Identifikation kann bei der erfindungsgemäßen Identifikationsvorrichtung derart ablaufen, wie es beispielsweise in den Patentschriften DE 42 22 387 C2, US 4,977,601 oder in der Offenlegungsschrift EP 0 402 779 A2 beschrieben ist. Die Meßeinrichtung kann dabei mit Lichtsignalen, Schallsignalen oder elektromagnetischen Wellen betrieben werden. Auch kann die Messung der Oberflächenstruktur der Epidermis indirekt über eine Zwischenschicht erfolgen, wie es in der Patentschrift DE 42 22 287 beschrieben ist. Es können auch andere biometrische Charakteristika eines Benutzers erfaßt werden, wie beispielsweise Schweißdrüsen im Finger 4 eines Benutzers, Abmessungen oder Struktur der Handfläche oder funktionell gleichwertigen, biometrischen Strukturen.

Für die erfindungsgemäße Identifikationsvorrichtung ist das Verfahren zum Messen der Oberflächenstruktur des Prüfobjekts 3, 4 oder das Erfassen der biometrischen Struktur des Prüfobjekts 3, 4 nicht relevant. Wichtig ist, daß der Schalter 10 Bestandteil der Auflagefläche 2 oder des Fühlerelements 1 ist und daß der Schalter 10 durch Auflegen oder Annähern des Prüfobjekts 3 die Energieversorgung für die Identifikationsvorrichtung einschaltet.

Dabei sollte der Schalter 10 etwa in der Mitte der Auflagefläche 2 angeordnet sein, damit er sicher betätigt wird, wenn das Prüfobjekt 3, 4 die Auflagefläche 2 berührt. Es können aber auch mehrere Schalter 10 über die Auflagefläche 2 verteilt angeordnet sein. Allerdings dürfen diese Schalter 10 dem Identifikationsvorgang nicht stark beeinflussen, d.h. die Abmessungen eines jeden Schalters 10 sollten daher weit unter einem Millimeter liegen oder der Schalter 10 sollte durchlässig für die verwendeten Signale sein. Vorteilhafterweise wird der Schalter 10 derart innerhalb der Auflagefläche 2 angeordnet, daß er den Identifikationsvorgang am wenigsten stört, jedoch sicher von dem Prüfobjekt 3, 4 betätigt wird.

Falls der zum Betrieb der Identifikationsvorrichtung notwendige Strom den Schalter 10 unzulässigerweise überlasten würde, so wird ein oder mehrere zusätzliche, elektronische Schalteinrichtungen vorgesehen, die von dem Schalter 10 aktiviert werden, um die elektrische Verbindung zwischen der Batterie 9 und der Identifikationsvorrichtung herzustellen. Als Schalteinrichtungen können ein Relais, ein Halbleiter-Leistungsschalter oder andere, funktionell gleichwertige Schalter verwendet werden. Auf jeden Fall ist der Schalter 10 der Auslöser für das Einschalten der Identifikationsvorrichtung und läßt nur während des Identifikationsvorganges Strom zu der Identifikationsvorrichtung fließen.

Die Sendeeinheit 5 kann breitbandige Impulse aussenden, deren Impulsantwort von der Empfangseinheit 6 empfangen wird. Die Sendeeinheit 5 und die Empfangseinheit 6 können auch matrixförmig (flächenhaft) ausgebildet sein, um durch paralleles Aussenden und Empfangen von Signalen ein sogenanntes Hologramm zu erzeugen, das von der Auswerteeinheit 8 ausgewertet und mit den gespeicherten Mustern verglichen wird.

Die Sendeeinheit 5 und die Empfangseinheit 6 können auch innerhalb oder unmittelbar an dem Fühlerelement 1 angeordnet sein. Das Fühlerelement 1 ist dabei plattenförmig, scheibenförmig oder auch als mit einem speziellen Übertragungsmedium gefüllter Hohlkörper ausgebildet.

Die erfindungsgemäße Identifikationsvorrichtung ist nicht nur auf die Verwendung in einem Kraftfahrzeug beschränkt. Sie kann auch bei weiteren Geräten verwendet werden, wie Personalcomputern, Telefonen oder anderen Geräten, bei denen eine Berechtigung abgefragt wird oder eine Authentifikation stattfindet.

Die Steuereinheit 7 und die Auswerteeinheit 8 können durch ein einziges Bauteil, beispielsweise durch einen Mikroprozessor, realisiert sein. Der Mikroprozessor kann dabei ohnehin in dem Gerät vorhanden sein und somit auch andere Funktionen steuern.

## Patentansprüche

1. Identifikationsvorrichtung mit
- einem Fühlerelement (1) mit einer Auflagefläche (2), auf die ein Prüfobjekt (3, 4), insbesondere ein Finger eines Benutzers, aufgelegt wird,
- einer Meßeinrichtung mit einer Sendeeinheit (5), durch die Signale zu dem Prüfobjekt (3, 4) gesendet werden, und einer Empfangseinheit (6) mit einer angeschlossenen Auswerteeinheit (7, 8), durch die Signale unmittelbar oder mittelbar von dem Prüfobjekt (3, 4) empfangen und ausgewertet werden, um die jeweilige Flächen- oder Raumstruktur des Prüfobjekts (3, 4), insbesondere die Epithelstruktur der menschlichen Haut einer Fingerkuppe, zu erkennen, und
- einer Vergleichseinrichtung (8), in der die gemessene Raumstruktur mit gespeicherten Sollwerten verglichen wird und die bei zumindest weitgehender Übereinstimmung ein Freigabesignal erzeugt,
**dadurch gekennzeichnet**, daß das Fühlerelement (1) zumindest einen Schalter (10) aufweist, der an oder in der Nähe der Oberfläche des Fühlerelements (1) innerhalb der Auflagefläche (2) angeordnet ist und der betätigt wird, sobald das Prüfobjekt (3, 4) auf die Auflagefläche (2) einwirkt.

2. Identifikationsvorrichtung nach Anspruch 1, dadurch gekennzeichnet, daß der Schalter (10) einerseits mit einer Energiequelle (9) und andererseits mit der Meßeinrichtung (5, 6, 7) verbunden ist, wobei die Energiequelle nach Betätigen des Schalters mit der Meßeinrichtung verbunden wird, damit die Meßeinrichtung mit Energie versorgt wird.

3. Identifikationsvorrichtung nach einem der vorhergehenden Ansprüche, dadurch gekennzeichnet, daß der Schalter (10) als Piezoelement ausgebildet ist, bei dessen Betätigen eine Spannung zur Energieversorgung der Meßeinrichtung (5, 6, 7) erzeugt wird.

4. Identifikationsvorrichtung nach einem der vorhergehenden Ansprüche, dadurch gekennzeichnet, daß das Fühlerelement (1) an der Außenseite eines Kraftfahrzeugs in der Nähe eines Türgriffs (18) angeordnet ist und die Meßeinrichtung (5, 6, 7) mit Türschlössern (19) und/oder einer Wegfahrsperre verbunden ist.

5. Identifikationsvorrichtung nach einem der vorhergehenden Ansprüche, dadurch gekennzeichnet, daß der Schalter (10) mit einem pyrotechnischem Element verbunden ist, durch dessen Entladeenergie Türriegel von Türschlösser (19) betätigt werden.

6. Identifikationsvorrichtung nach einem der vorhergehenden Ansprüche, dadurch gekennzeichnet, daß die Meßeinrichtung (5, 6, 7) Lichtsignale, Schallsignale und/oder elektromagnetische Wellen zu dem Prüfobjekt (3, 4) sendet und/oder von dort empfängt.

7. Identifikationsvorrichtung nach einem der vorhergehenden Ansprüche, dadurch gekennzeichnet, daß der Schalter (10) als ein mikromechanischer Halbleiterschalter ausgebildet ist, der durch Niederdrücken schaltet.

8. Identifikationsvorrichtung nach einem der vorhergehenden Ansprüche, dadurch gekennzeichnet, daß der Schalter (10) ein kapazitiver Schalter ist, der durch eine Kapazitäts- oder Dielektrizitätsänderung infolge der Berührung durch das Prüfobjekt (3, 4) schaltet.
